# EUROPEAN PATENT APPLICATION

(11) **EP 4 438 637 A1**
(43) Date of publication of application: **02.10.2024**
(21) Application number: 22899023.0
(22) Date of filing: 23.11.2022
(51) Int. Cl.: C08F 210/16, C08F 4/6592, C08F 4/659, C08L 23/12, C08L 23/08

(54) **ETHYLENE-ALPHA-OLEFIN-BASED COPOLYMER HAVING CONTROLLED SHORT CHAIN BRANCH AMOUNT, PREPARATION METHOD THEREFOR, AND RESIN COMPOSITION AND MOLDED PRODUCT WHICH COMPRISE OLEFIN-BASED COPOLYMER**

(30) Priority: 25.11.2021 KR 20210164681
(71) Applicant: LOTTE CHEMICAL CORPORATION, Seoul 05551 (KR)
(72) Inventor: LEE, Rai-Ha, Daejeon 34110 (KR); HONG, Youn-Jin, Daejeon 34110 (KR); HUH, Chan-Hwa, Daejeon 34110 (KR); SHIN, Eun-Hye, Daejeon 34110 (KR); KIM, Ho-Seok, Daejeon 34110 (KR); CHAE, Byung-Hun, Daejeon 34110 (KR)
(74) Representative: Germain Maureau
(86) International application number: PCT/KR2022/018604
(87) International publication number: WO 2023/096341

(57) **Abstract**

The present invention provides an olefin-based copolymer having a controlled short chain branch amount, a preparation method therefor, and a resin composition and a molded product which comprise the olefin-based copolymer. The olefin-based copolymer of the present invention is an ethylene-alpha-olefin copolymer comprising an ethylene structural unit and an alpha-olefin structural unit, and provided is an ethylene-alpha-olefin copolymer comprising a first peak displayed at a first elution temperature of 35-70°C and a second peak displayed at a second elution temperature of 70-100°C during thermal gradient interaction chromatography (TGIC) analysis, wherein the fraction defined by the first peak from the integral area of the first peak and the second peak is 45-55% and is greater than the fraction defined by the second peak from the integral area of the second peak.

## Description

### [Technical Field]

The present disclosure relates to an ethylene-alpha-olefin-based copolymer having a controlled short chain branch content, a method for producing the same, and a resin composition and a molded product comprising the same.

### [Background Art]

The catalyst [Me₂Si (Me₄C₅) NtBu] TiCl₂ (Constrained-Geometry Catalyst, "CGC") available from Dow Chemical Company, used in the conventional ethylene-alpha-olefin copolymerization reaction has excellent copolymerization of alpha-olefins with high steric hindrance, such as 1-hexene and 1-octene, and it is known that a polymerized olefin-based polymer not only has a narrow molecular weight distribution (MWD), but also has a single chain structure having a certain short chain branch distribution.

Since these existing ethylene-alpha-olefin-based copolymers basically have a single chain structure having a uniform short chain branch distribution, it is known that it is not easy to simultaneously achieve the required physical properties such as compatibility with other resins, processability, strength, and impact strength.

For example, in order to improve low-temperature physical properties by compounding an ethylene-alpha-olefin copolymer and polypropylene, an ethylene-alpha-olefin copolymer having a relatively low density should be used, and the low-density ethylene-alpha-olefin copolymer has the disadvantage of low strength.

### [Disclosure]

### [Technical Problem]

An object of the present disclosure is to provide an ethylene-alpha-olefin-based copolymer composition having two chain structures having different short chain branch contents using one type of metallocene catalyst.

Another object of the present disclosure is to provide a method for synthesizing a polymer ranging from a low crystallinity region to a high crystallinity region by producing two polymer chains having different short chain branch contents in the same density range.

### [Technical Solution]

According to an aspect of the present disclosure, an ethylene-alpha-olefin-based copolymer contains an ethylene structural unit and an alpha-olefin structural unit, wherein the ethylene-alpha-olefin-based copolymer has a first peak appearing at a first elution temperature of 35 to 70°C and a second peak appearing at a second elution temperature of 70 to 100°C when measured using thermal gradient interaction chromatography (TGIC) analysis, and a fraction ratio defined by the first peak from an integral area of the first peak and the second peak is 45 to 55% and is greater than a fraction ratio defined by the second peak from an integral area of the second peak.

The fraction ratio of the second peak may be 35 to 50%.

A fraction of the first peak may have a short chain branching number of 55 or more per 1,000 carbon atoms, and a fraction of the second peak may have a short chain branching number of 40 or less per 1,000 carbon atoms.

The ethylene-alpha-olefin copolymer may have a density of 0.868 to 0.880 g/ml.

According to another aspect of the present disclosure, a method for producing an ethylene-alpha-olefin-based copolymer includes polymerizing ethylene and at least one olefin-based monomer in the presence of a main catalyst compound containing a transition metal compound represented by the following Chemical Formula 1 and one or more cocatalyst compounds selected from compounds represented by the following Chemical Formulas 2 to 4. 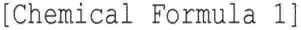 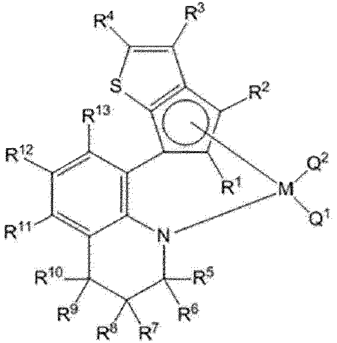 (In Chemical Formula 1, M is a group 4 transition metal; Q¹ and Q² are each independently halogen, (C₁-C₂₀) alkyl, (C₂-C₂₀) alkenyl, (C₂-C₂₀) alkynyl, (C₆-C₂₀) aryl, (C₁-C₂₀) alkyl (C₆-C₂₀) aryl, (C₆-C₂₀) aryl (C₁-C₂₀) alkyl, (C₁-C₂₀) alkylamido, (C₆-C₂₀) arylamido, or (C₁-C₂₀) alkylidene; R¹, R², R³, R⁴, R⁵, R⁶, R⁷, R⁸, R⁹, and R¹⁰ are each independently hydrogen, (C₁-C₂₀) alkyl with or without an acetal, ketal, or ether group, (C₂-C₂₀) alkenyl with or without an acetal, ketal, or ether group, (C₁-C₂₀) alkyl (C₆-C₂₀) aryl with or without an acetal, ketal, or ether group, (C₆-C₂₀) aryl (C₁-C₂₀) alkyl with or without an acetal, ketal, or ether group, or (C₁-C₂₀) alkylsilyl with or without an acetal, ketal, or ether group; R¹ and R² may be connected to each other to form a ring, R³ and R⁴ may be connected to each other to form a ring, and two or more of R⁵ to R¹⁰ may be connected to each other to form a ring; R¹¹, R¹², and R¹³ are each dependently hydrogen, (C₁-C₂₀) alkyl with or without an acetal, ketal, or ether group, (C₂-C₂₀) alkenyl with or without an acetal, ketal, or ether group, (C₁-C₂₀) alkyl (C₆-C₂₀) aryl with or without an acetal, ketal, or ether group, (C₆-C₂₀) aryl (C₁-C₂₀) alkyl with or without an acetal, ketal, or ether group, (C₁-C₂₀) alkylsilyl with or without an acetal, ketal, or ether group, (C₁-C₂₀) alkoxy, or (C₆-C₂₀) aryloxy; and R¹¹ and R¹² or R¹² and R¹³ may be connected to each other to form a ring.)

[Chemical Formula 2] -[Al(Ra)-O]ₙ-

(In Chemical Formula 2, Ra is each independently halogen or a (C₁-C₂₀) hydrocarbyl group substituted or unsubstituted with halogen; and n is an integer of 2 or more.)

[Chemical Formula 3] Q(Rb)₃

(In Chemical Formula 3, Q is aluminum or boron; and Rb is each independently halogen or a (C₁-C₂₀) hydrocarbyl group substituted or unsubstituted with halogen.)

[Chemical Formula 4] [W]⁺[Z(Rc)₄]⁻

(In Chemical Formula 4, [W]⁺ is a cationic Lewis acid or a cationic Lewis acid to which a hydrogen atom is bonded; Z is a group 13 element; and Rc is each independently a (C₆-C₂₀) aryl group substituted with one or two or more substituents selected from the group consisting of halogen, a (C₁-C₂₀) hydrocarbyl group, an alkoxy group, and a phenoxy group, or a (C₁-C₂₀) alkyl group substituted with one or two or more substituents selected from the group consisting of halogen, a (C₁-C₂₀) hydrocarbyl group, an alkoxy group, and a phenoxy group.)

R-type and S-type steric compounds coexist in the transition metal compound.

According to another aspect of the present disclosure, a polypropylene resin composition contains polypropylene and the ethylene-alpha-olefin copolymer.

According to another aspect of the present disclosure, a molded product is formed of the resin composition.

### [Advantageous Effects]

In the ethylene-α-olefin-based copolymer composition having two chain structures having different short chain branch contents using one type of metallocene catalyst of the present disclosure, a polymer chain having a high short chain branch content, which is an amorphous or low-crystalline region, improves low-temperature impact strength, and a polymer chain having a low short chain branch content may simultaneously improve tensile elongation, tensile strength, and shrinkage, which may be reduced due to an increase in amorphous or low-crystalline region.

### [Description of Drawings]

FIG. 1 is a graph showing the results of TGIC analysis of an ethylene-1-butene copolymer produced in Example 1.
FIG. 2 is a graph showing the results of TGIC analysis of an ethylene-1-butene copolymer produced in Example 2.
FIG. 3 is a graph showing the results of TGIC analysis of an ethylene-1-butene copolymer produced in Example 3.
FIG. 4 is a graph showing the results of TGIC analysis of an ethylene-1-octene copolymer produced in Example 4.
FIG. 5 is a graph showing the results of TGIC analysis of an ethylene-1-butene copolymer of Comparative Example 1.
FIG. 6 is a graph showing the results of TGIC analysis of an ethylene-1-octene copolymer of Comparative Example 2.

### [Best Mode for Invention]

Hereinafter, preferred exemplary embodiments in the present disclosure will be described. However, the exemplary embodiments in the present disclosure may be modified in several other forms, and the scope of the present disclosure is not limited to exemplary embodiments to be described below.

The term "alkyl" used in the present disclosure refers to a monovalent linear or branched saturated hydrocarbon radical composed of only carbon and hydrogen atoms. Examples of such an alkyl radical include, but are not limited to, methyl, ethyl, propyl, isopropyl, butyl, isobutyl, t-butyl, pentyl, hexyl, octyl, dodecyl, cyclopropyl, cyclobutyl, cyclopentyl, cyclohexyl, cycloheptyl, cyclooctyl, cyclononyl, and cyclodecyl.

In addition, the term "alkenyl" used in the present disclosure refers to a linear or branched hydrocarbon radical containing one or more carbon-carbon double bonds, and includes ethenyl, propenyl, butenyl, pentenyl, and the like, but is not limited thereto.

In addition, the term "alkynyl" used in the present disclosure refers to a linear or branched hydrocarbon radical containing one or more carbon-carbon triple bonds, and includes methynyl, ethynyl, propynyl, butynyl, pentynyl, hexynyl, heptynyl, octynyl, and the like, but is not limited thereto.

In addition, the term "aryl" used in the present disclosure is an organic radical derived from an aromatic hydrocarbon by removal of one hydrogen, and includes a single or fused ring-based system. Specific examples of the aryl include, but are not limited to, phenyl, naphthyl, biphenyl, anthryl, fluorenyl, phenanthryl, triphenylenyl, pyrenyl, perylenyl, chrysenyl, naphthacenyl, and fluoranthenyl.

In addition, the term "alkylaryl" used in the present disclosure refers to an organic group in which one or more hydrogens of an aryl group are substituted with an alkyl group, and includes methylphenyl, ethylphenyl, n-propylphenyl, isopropylphenyl, n-butylphenyl, isobutylphenyl, t-butylphenyl, and the like, but is not limited thereto.

In addition, the term "arylalkyl" used in the present disclosure refers to an organic group in which one or more hydrogens of an alkyl group are substituted with an aryl group, and includes phenylpropyl, phenylhexyl, and the like, but is not limited thereto.

In addition, the term "amido" used in the present disclosure refers to an amino group (-NH₂) bonded to a carbonyl group (C=O), the term "alkylamido" refers to an organic group in which at least one hydrogen in -NH₂ of an amido group is substituted with an alkyl group, the term "arylamido" refers to an organic group in which at least one hydrogen in -NH₂ of an amido group is substituted with an aryl group, and the alkyl group in the alkylamido group and the aryl group in the arylamido group may be the same as the examples of the alkyl group and aryl group described above, but are not limited thereto.

In addition, the term "alkylidene" used in the present disclosure refers to a divalent aliphatic hydrocarbon group in which two hydrogen atoms are removed from the same carbon atom of the alkyl group, and includes ethylidene, propylidene, isopropylidene, butylidene, pentylidene, and the like, but is not limited thereto.

In addition, the term "acetal" used in the present disclosure refers to an organic group formed by a combination of an alcohol and an aldehyde, that is, a substituent having two ether (-OR) bonds on one carbon, and includes methoxymethoxy, 1-methoxyethoxy, 1-methoxypropyloxy, 1-methoxybutyloxy, 1-ethoxyethoxy, 1-ethoxypropyloxy, 1-ethoxybutyloxy, 1-(n-butoxy)ethoxy, 1-(iso-butoxy)ethoxy, 1-(sec-butoxy)ethoxy, 1-(tert-butoxy)ethoxy, 1-(cyclohexyloxy)ethoxy, 1-methoxy-1-methylmethoxy, 1-methoxy-1-methylethoxy, and the like, but is not limited thereto.

In addition, the term "ether" used in the present disclosure is an organic group having at least one ether bond (-O-), and includes 2-methoxyethyl, 2-ethoxyethyl, 2-butoxyethyl, 2-phenoxyethyl, 2-(2-methoxyethoxy)ethyl, 3-methoxypropyl, 3-butoxypropyl, 3-phenoxypropyl, 2-methoxy-1-methylethyl, 2-methoxy-2-methylethyl, 2-methoxyethyl, 2-ethoxyethyl, 2-butoxyethyl, 2-phenoxyethyl, and the like, but is not limited thereto.

In addition, the term "silyl" used in the present disclosure refers to a -SiH₃ radical derived from silane, at least one of hydrogen atoms in the silyl group may be substituted with various organic groups such as alkyl and halogen, and specific examples thereof include, but are not limited to, trimethylsilyl, triethylsilyl, t-butyldimethylsilyl, vinyldimethylsilyl, propyldimethylsilyl, triphenylsilyl, diphenylsilyl, phenylsilyl, trimethoxysilyl, methyldimethoxysilyl, ethyldiethoxysilyl, triethoxysilyl, vinyldimethoxysilyl, and triphenoxysilyl.

In addition, the term "alkoxy" used in the present disclosure refers to an -O-alkyl radical, where "alkyl" is as defined above. Examples of the alkoxy radical include, but are not limited to, methoxy, ethoxy, propoxy, isopropoxy, butoxy, isobutoxy, and t-butoxy.

In addition, the term "halogen" used in the present disclosure refers to a fluorine, chlorine, bromine, or iodine atom.

In addition, the term "Cₙ" used in the present disclosure refers to n carbon atoms.

The present disclosure provides an ethylene-alpha-olefin copolymer that uses one type of metallocene catalyst but has two chains having different short chain branch contents due to a catalyst isomer.

The ethylene-alpha-olefin copolymer produced in the present disclosure is an ethylene-alpha-olefin copolymer containing an ethylene structural unit and an alpha-olefin structural unit, and when analyzed using thermal gradient interaction chromatography (TGIC), it may be confirmed that the copolymer is eluted at two different temperatures, and through this, two chain structures having different short chain branch contents are formed.

The present disclosure provides an ethylene-alpha-olefin-based copolymer having a first peak appearing at a first elution temperature of 35 to 70°C and a second peak appearing at a second elution temperature of 70 to 100°C when measured in thermal gradient interaction chromatography (TGIC) analysis. Such an ethylene-alpha-olefin-based copolymer may have a fraction ratio defined from an integral area of the first peak of 45 to 55%, and a first fraction of the copolymer may have a short chain branching (SCB) number of 55 or more per 1,000 carbon atoms.

In the present disclosure, the polymerization of ethylene and alpha-olefins may be performed in the presence of a catalyst composition in which R-type and S-type steric compounds coexist in the transition metal compound represented by the following Chemical Formula 1.

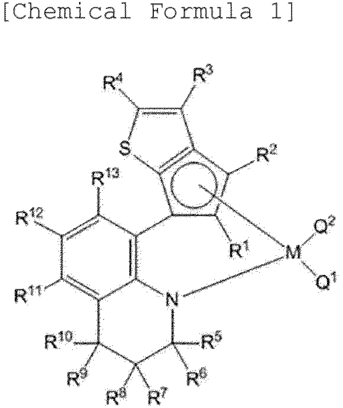

In Chemical Formula 1,
M is a group 4 transition metal;
Q¹ and Q² are each independently halogen, (C₁-C₂₀) alkyl, (C₂-C₂₀) alkenyl, (C₂-C₂₀) alkynyl, (C₆-C₂₀) aryl, (C₁-C₂₀) alkyl (C₆-C₂₀) aryl, (C₆-C₂₀) aryl (C₁-C₂₀) alkyl, (C₁-C₂₀) alkylamido, (C₆-C₂₀) arylamido, or (C₁-C₂₀) alkylidene;
R¹, R², R³, R⁴, R⁵, R⁶, R⁷, R⁸, R⁹, and R¹⁰ are each independently hydrogen, (C₁-C₂₀) alkyl with or without an acetal, ketal, or ether group, (C₂-C₂₀) alkenyl with or without an acetal, ketal, or ether group, (C₁-C₂₀) alkyl (C₆-C₂₀) aryl with or without an acetal, ketal, or ether group, (C₆-C₂₀) aryl (C₁-C₂₀) alkyl with or without an acetal, ketal, or ether group, or (C₁-C₂₀) alkylsilyl with or without an acetal, ketal, or ether group; R¹ and R² may be connected to each other to form a ring, R³ and R⁴ may be connected to each other to form a ring, and two or more of R⁵ to R¹⁰ may be connected to each other to form a ring;
R¹¹, R¹², and R¹³ are each dependently hydrogen, (C₁-C₂₀) alkyl with or without an acetal, ketal, or ether group, (C₂-C₂₀) alkenyl with or without an acetal, ketal, or ether group, (C₁-C₂₀) alkyl (C₆-C₂₀) aryl with or without an acetal, ketal, or ether group, (C₆-C₂₀) aryl (C₁-C₂₀) alkyl with or without an acetal, ketal, or ether group, (C₁-C₂₀) alkylsilyl with or without an acetal, ketal, or ether group, (C₁-C₂₀) alkoxy, or (C₆-C₂₀) aryloxy; and R¹¹ and R¹² or R¹² and R¹³ may be connected to each other to form a ring.

The transition metal compound represented by Chemical Formula 1 contains a new structural ligand in which an amido ligand and ortho-phenylene form a condensed ring, and a pentagonal ring n-ligand bonded to the ortho-phenylene is fused by a thiophene heterocycle. Accordingly, the transition metal compound has the advantage of having a higher copolymerization activity of ethylene-alpha-olefins than a transition metal compound in which a thiophene heterocycle is not fused.

In the present disclosure, in the compound represented by Chemical Formula 1, R¹, R², R³, R⁴, R⁵, R⁶, R⁷, R⁸, R⁹, R¹⁰, R¹¹, R¹², and R¹³ may be each independently substituted with a substituent including an acetal, ketal, or ether group, and when substituted with the above substituent, it may be more advantageous for supporting the compound on a surface of a carrier.

In addition, in the compound represented by Chemical Formula 1, M is preferably titanium (Ti), zirconium (Zr), or hafnium (Hf).

In addition, in the transition metal compound represented by Chemical Formula 1, Q¹ and Q² are each independently preferably halogen or (C₁-C₂₀) alkyl, and more preferably chlorine or methyl.

In addition, in the transition metal compound represented by Chemical Formula 1, R¹, R², R³, R⁴, and R⁵ may be each independently hydrogen or (C₁-C₂₀) alkyl, and preferably, may be each independently hydrogen or methyl. More preferably, R¹, R², R³, R⁴, and R⁵ may be each independently hydrogen or methyl, but at least one of R³ and R⁴ may be methyl and R⁵ may be methyl.

In addition, in the transition metal compound represented by Chemical Formula 1, R⁶, R⁷, R⁸, R⁹, R¹⁰, R¹¹, R¹², and R¹³ are each preferably hydrogen.

The transition metal compound represented by Chemical Formula 1 preferably contains the above substituents to control the electronic and steric environment around the metal.

Meanwhile, the transition metal compound represented by Chemical Formula 1 may be obtained from a transition metal compound precursor represented by the following Chemical Formula 5.

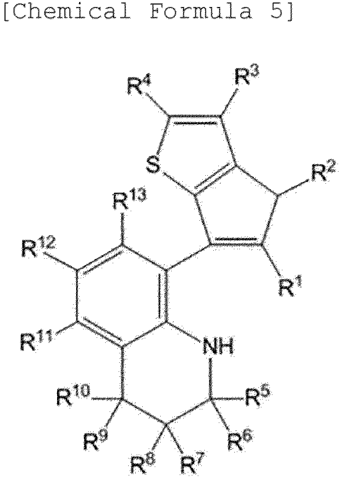

In Chemical Formula 5, R¹, R², R³, R⁴, R⁵, R⁶, R⁷, R⁸, R⁹, R¹⁰, R¹¹, R¹², and R¹³ are each as defined in Chemical Formula 1.

Here, the transition metal compound precursor represented by Chemical Formula 5 may be prepared by a method including: (i) reacting a tetrahydroquinoline derivative represented by the following Chemical Formula 6 with alkyl lithium and then adding carbon dioxide to produce a compound represented by the following Chemical Formula 7; and (ii) reacting a compound represented by the following Chemical Formula 7 with alkyl lithium, and then adding a compound represented by the following Chemical Formula 8 and treating the compound with an acid.

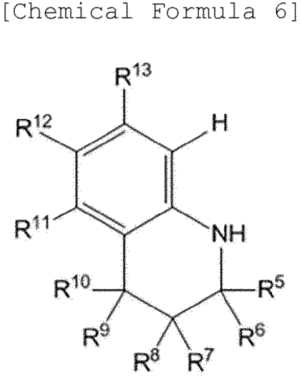

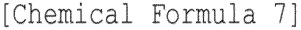

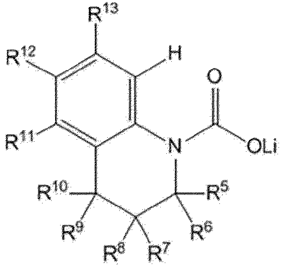

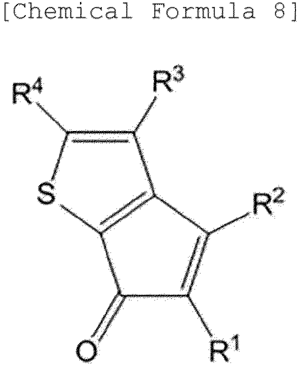

In Chemical Formulas 6, 7, and 8, R¹, R², R³, R⁴, R⁵, R⁶, R⁷, R⁸, R⁹, R¹⁰, R¹¹, R¹², and R¹³ are each as defined in Chemical Formula 1.

However, in Chemical Formulas 6, 7, and 8, R¹, R², R³, R⁴, and R⁵ may be each independently hydrogen or (C₁-C₂₀) alkyl, and preferably, may be each independently hydrogen or methyl. More preferably, R¹, R², R³, R⁴, and R⁵ may be each independently hydrogen or methyl, but at least one of R³ and R⁴ may be methyl and R⁵ may be methyl. In addition, R⁶, R⁷, R⁸, R⁹, R¹⁰, R¹¹, R¹², and R¹³ are each preferably hydrogen. Through this, accessibility and reactivity of a starting material may be secured, and it is advantageous for controlling the electronic and steric environment of the transition metal compound of Chemical Formula 1 to be produced.

In the production of the precursor compound represented by Chemical Formula 5, step (i) is a reaction in which a tetrahydroquinoline derivative represented by Chemical Formula 6 is reacted with alkyl lithium and then converted into a compound represented by Chemical Formula 5 by adding carbon dioxide, which may be performed according to a method described in a known literature (Tetrahedron Lett. 1985, 26, 5935; Tetrahedron 1986, 42, 2571; J. Chem. SC. Perkin Trans. 1989, 16).

In addition, in step (ii), an ortho-lithium compound is produced by reacting the compound represented by Chemical Formula 7 with alkyl lithium to induce a deprotonation reaction, and then, the compound represented by Chemical Formula 8 is reacted and treated with an acid, such that a transition metal compound precursor represented by Chemical Formula 5 may be obtained.

The reaction of producing an ortho-lithium compound by reacting the compound represented by Chemical Formula 7 with alkyl lithium may be performed according to a method described in a known literature (Organometallics 2007, 27, 6685 or Korean Patent Laid-Open Publication No. 2008-0065868) . In the present disclosure, a transition metal compound precursor represented by Chemical Formula 5 may be obtained by reacting the produced ortho-lithium compound with the compound represented by Chemical Formula 8 and treating the compound with an acid.

Here, the compound represented by Chemical Formula 8 may be produced through various known methods. The following Reaction Formula 1 shows an example of the production methods, and the transition metal compound precursor of Chemical Formula 5 of the present disclosure may be easily and costeffectively prepared using not only a one-step reaction, but also an inexpensive starting material (J. Organomet. Chem., 2005, 690, 4213).

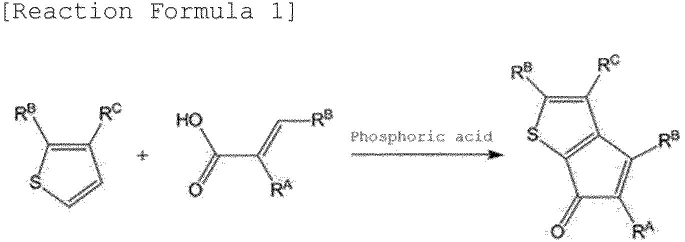

Meanwhile, various known methods may be used to synthesize the transition metal compound represented by Chemical Formula 1 from the transition metal compound precursor represented by Chemical Formula 5 obtained through the above method. The transition metal compound may be produced by a method in which a dilithium compound of cyclopentadienyl anion and amide anion is produced by inducing a deprotonation reaction through addition of about 2 equivalents of alkyl lithium to the transition metal compound precursor represented by Chemical Formula 5, and then, (Q¹) (Q²)MCl₂ is added to remove about 2 equivalents of LiCl.

In addition, the compound represented by Chemical Formula 5 may be reacted with a M(NMe₂)₄ compound to remove about 2 equivalents of HNMe₂ to obtain a transition metal compound represented by Chemical Formula 1 where Q¹ and Q² are both NMe₂, and a NMe₂ ligand may be converted into a chlorine ligand by reacting Me₃SiCl or Me₂SiCl₂ with the obtained transition metal compound.

When the transition metal compound represented by Chemical Formula 1 produced through the above process is polymerized in the presence of a catalyst composition in which R-type and S-type steric compounds coexist, two types of polymers having different structures and physical properties may be formed.

This is determined to be due to a difference in ethylene conversion rates between R-type and S-type steric compounds. The comonomer conversion rates of R-type and S-type steric compounds are similar, but may have different ethylene conversion rates due to a difference in steric structure. Specifically, the S-type steric compound requires additional energy to form a specific arrangement for a polymerization reaction because the space into which ethylene may be inserted is wider than that of the R-type steric compound. Therefore, the S-type steric compound exhibits a low ethylene conversion rate, and thus may form a polymer chain having a relatively high comonomer content and a thin lamella thickness. On the other hand, the R-type steric compound exhibits a high ethylene conversion rate and may form a polymer chain having a relatively low comonomer content and a thick lamella thickness.

In the transition metal compound, which is the main catalyst of the present disclosure, two steric compounds, R-type and S-type, coexist. As such, in the transition metal compound of the present disclosure, two steric compounds coexist, such that polymers having different structures may be produced despite using a single catalyst. As shown in the following structural formula, the transition metal compound of the present disclosure has two compounds, an R-type steric compound (a) and an S-type steric compound (b), and thus, acts as two catalysts.

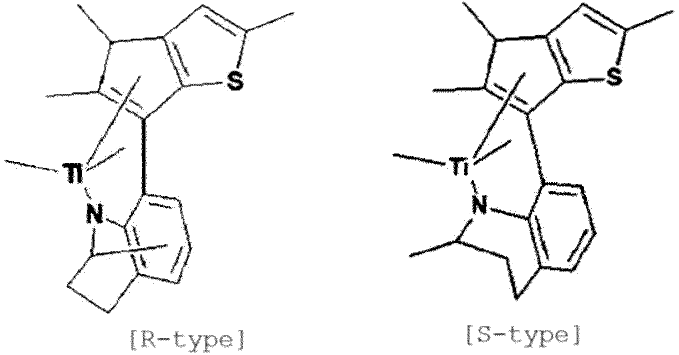

The R-type steric compound (a) forms a low-molecular-weight polymer chain containing a low comonomer, and the S-type steric compound (b) forms a high-molecular-weight polymer chain containing a high comonomer. The reason is that although the R-type steric compound (a) and the S-type steric compound (b) have similar comonomer conversion rates, the S-type steric compound has a low ethylene conversion rate, and it is determined that the S-type steric compound (b) forms a polymer chain having a relatively high comonomer content.

When the catalyst changes into an active species, the methyl group of Ti is located on the opposite side due to steric hindrance caused by the sulfur (S) element of thiophene. Thereafter, in the case of the R-type steric compound (a), the space into which ethylene is inserted is narrow and rotation is not possible, and therefore, ethylene lies on the same plane as the methyl group (Me), as shown in the following structural formula showing the insertion structure of the meso-active species ethylene. As a result, polymerization proceeds easily through migration.

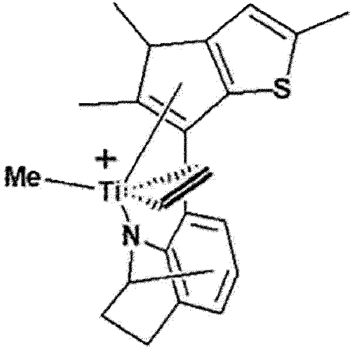

On the other hand, in case of the S-type steric compound (b), as shown in the following structural formula showing the insertion structure of the racemic active species ethylene, the ethylene insertion space is large, and therefore, ethylene rotates and coordinates with Ti, and rotation energy is required to lie on the same plane as the methyl group (Me) for polymerization. Therefore, compared to the R-type steric compound (a), the S-type steric compound (b) has a lower ethylene conversion rate.

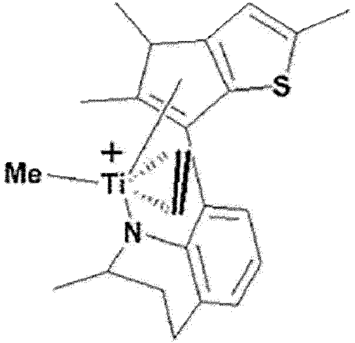

When a comonomer is inserted, a molecular size thereof is larger than that of ethylene, and the S-type steric compound also lies on the same plane as the methyl group (Me) due to steric hindrance of the ligand, and therefore, it is determined that a comonomer conversion rate of the S-type steric compound (b) is similar to that of the R-type steric compound (a).

In order to produce an ethylene-alpha-olefin copolymer containing two types of polymer chains having different comonomer contents in the presence of the above catalyst composition, it is preferable that the R-type steric compound and the S-type steric compound are present in a molar ratio of 1:0.1 to 1:1. When the molar ratio is less than 1:0.1, a large amount of low-density polymer chains are formed due to the predominance of the S-type steric compound, which may cause stickiness of the product, and when the molar ratio exceeds 1:1, high-density polymer chains become dominant, resulting in insufficient improvement in tensile elongation, low-temperature impact strength, and shrinkage.

In the present disclosure, the catalyst composition may further contain a cocatalyst compound. The cocatalyst compound activates the transition metal compound, and an aluminoxane compound, an organo-aluminum compound, a bulky compound that activates the catalyst compound, or the like may be used. Specifically, the cocatalyst compound may be selected from the group consisting of compounds represented by the following Chemical Formulas 2 to 4.

[Chemical Formula 2] -[Al(Ra)-O]ₙ-

In Chemical Formula 6,
Ra is each independently halogen or a (C₁-C₂₀) hydrocarbyl group substituted or unsubstituted with halogen, and
n is an integer of 2 or more.

[Chemical Formula 3] Q(Rb)₃

In Chemical Formula 3,
Q is aluminum or boron, and
Rb is each independently halogen or a (C₁-C₂₀) hydrocarbyl group substituted or unsubstituted with halogen.

[Chemical Formula 4] [W]⁺[Z(Rc)₄]⁻

In Chemical Formula 4,
[W]⁺ is a cationic Lewis acid or a cationic Lewis acid to which a hydrogen atom is bonded,
Z is a group 13 element, and
Rc is each independently a (C₆-C₂₀) aryl group substituted with one or two or more substituents selected from the group consisting of halogen, a (C₁-C₂₀) hydrocarbyl group, an alkoxy group, and a phenoxy group, or a (C₁-C₂₀) alkyl group substituted with one or two or more substituents selected from the group consisting of halogen, a (C₁-C₂₀) hydrocarbyl group, an alkoxy group, and a phenoxy group.

The cocatalyst compound is contained in the catalyst together with the transition metal compound represented by Chemical Formula 1 and serves to activate the transition metal compound. Specifically, in order for the transition metal compound to become an active catalyst component used in olefin polymerization, a compound containing a unit represented by Chemical Formula 2, a compound represented by Chemical Formula 3, and a compound represented by Chemical Formula 4, which may extract a ligand from the transition metal compound and may act as a counterion having a weak binding force, that is, an anion, while cationizing the central metal (M¹ or M²), act together as cocatalysts.

The "unit" represented by Chemical Formula 2 is a structure in which n structures within [ ] are connected within the compound. When the compound contains the unit represented by Chemical Formula 2, other structures within the compound are not particularly limited, and the compound may be a cluster-type compound in which repeating units of Chemical Formula 2 are connected to each other, for example, a spherical compound.

In order for the cocatalyst compound to exhibit a more excellent activation effect, the compound represented by Chemical Formula 2 is not particularly limited as long as it is alkylaluminoxane, preferred examples of the compound represented by Chemical Formula 2 include methylaluminoxane, ethylaluminoxane, isobutylaluminoxane, and butylaluminoxane, and a particularly preferred compound is methylaluminoxane.

In addition, the compound represented by Chemical Formula 3 is an alkyl metal compound and is not particularly limited, and non-limiting examples thereof include trimethylaluminum, triethylaluminum, triisobutylaluminum, tripropylaluminum, tributylaluminum, dimethylchloroaluminum, triisopropylaluminum, tri-s-butyl aluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolyl aluminum, dimethyl aluminum methoxide, dimethyl aluminum ethoxide, trimethyl boron, triethyl boron, triisobutyl boron, tripropyl boron, and tributyl boron. Considering the activity of the transition metal compound, one or two or more selected from the group consisting of trimethylaluminum, triethylaluminum, and triisobutylaluminum may be preferably used.

Considering the activity of the transition metal compound, the compound represented by Chemical Formula 4 is a dimethylanilinium cation when [W]⁺ is a cationic Lewis acid to which a hydrogen atom is bonded, and [(C₆H₅)₃C]⁺ when [W]⁺ is a cationic Lewis acid, and [Z(Rc)₄]⁻ may be preferably [B(C₆F₅)₄]⁻.

As a non-limiting example of the compound represented by Chemical Formula 4 when [W]⁺ is a cationic Lewis acid to which a hydrogen atom is bonded, one or more selected from the group consisting of trimethylammonium tetrakis(pentafluorophenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-dimethylanilinium n-butyltris(pentafluorophenyl)borate, N,N-dimethylanilinium benzyltris(pentafluorophenyl)borate, N,N-dimethylanilinium tetrakis(4-(t-butyldimethylsilyl)-2,3,5,6-tetrafluorophenyl)borate, N,N-dimethylanilinium tetrakis(4-(t-triisopropylsilyl)-2,3,5,6-tetrafluorophenyl)borate, N,N-dimethylanilinium pentafluorophenoxytris(pentafluorophenyl)borate, N,N-diethylanilinium tetrakis(pentafluorophenyl)borate, N,N-dimethyl-2,4,6-trimethylanilinium tetrakis(pentafluorophenyl)borate, N,N-dimethylammonium tetrakis(2,3,5,6-tetrafluorophenyl)borate, N,N-diethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl(t-butyl)ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate, N,N-dimethyl-2,4,6-trimethylanilinium tetrakis(2,3,4,6-tetrafluorophenyl)borate, and dialkylammonium are preferable.

Non-limiting examples of the dialkylammonium include di-(i-propyl)ammonium tetrakis(pentafluorophenyl)borate and dicyclohexylammonium tetrakis(pentafluorophenyl)borate.

In addition, as a non-limiting example of the compound represented by Chemical Formula 4 when [W]⁺ is a cationic Lewis acid, at least one selected from the group consisting of trialkylphosphonium, dialkyloxonium, dialkylsulfonium, and carbonium salt are preferable.

Non-limiting examples of the trialkylphosphonium include triphenylphosphonium tetrakis(pentafluorophenyl)borate, tri(o-tolyl)phosphonium tetrakis(pentafluorophenyl)borate, and tri(2,6-dimethylphenyl)phosphonium tetrakis(pentafluorophenyl)borate.

Non-limiting examples of the dialkyloxonium include diphenyloxonium tetrakis(pentafluorophenyl)borate, di(o-tolyl)oxonium tetrakis(pentafluorophenyl)borate, and di(2,6-dimethylphenyloxonium tetrakis(pentafluorophenyl)borate.

Non-limiting examples of the dialkylsulfonium include diphenylsulfonium tetrakis(pentafluorophenyl)borate, di(o-tolyl)sulfonium tetrakis(pentafluorophenyl)borate, and bis(2,6-dimethylphenyl)sulfonium tetrakis(pentafluorophenyl)borate.

Non-limiting examples of the carbonium salt include tropylium tetrakis(pentafluorophenyl)borate, triphenylmethyl carbenium tetrakis(pentafluorophenyl)borate, and benzene(diazonium) tetrakis(pentafluorophenyl)borate.

A catalyst can be prepared using the compounds of Chemical Formulas 1 to 4, and in this case, the methods exemplified below can be used as a method for preparing a catalyst.

First, when each of Q¹ and Q² of the transition metal compound represented by Chemical Formula 1 is halogen, there is a method of brining the compound into contact with a compound represented by Chemical Formula 2. Second, when Q¹ and Q² in Chemical Formula 1 are alkyl radicals, a catalyst may be prepared by bringing the compound into contact with a mixture of a transition metal compound and compounds represented by Chemical Formulas 3 and 4, or a catalyst may be prepared by directly adding the compounds represented by Chemical Formulas 3 and 4 to a polymerizer.

The amount of the cocatalyst compound added may be determined by considering the amount of the main catalyst compound added of the transition metal compound represented by Chemical Formula 1 and the amount necessary to sufficiently activate the main catalyst compound. According to the present disclosure, a molar ratio of the cocatalyst compound to 1 mole of the transition metal contained in the main catalyst compound of the transition metal compound represented by Chemical Formula 1 may be 1:1 to 100,000, preferably 1:1 to 10,000, and more preferably 1:1 to 5,000 based on a molar ratio of the metal contained in the cocatalyst compound.

More specifically, a molar ratio of the compound represented by Chemical Formula 2 to the transition metal compound represented by Chemical Formula 1 may be preferably 1:10 to 5,000, more preferably 1:50 to 1,000, and most preferably 1:100 to 1,000. When the molar ratio of the compound represented by Chemical Formula 2 to the transition metal compound of Chemical Formula 1 is less than 1:10, the activation of the transition metal compound may not proceed completely due to a significantly small amount of aluminoxane, and when the molar ratio of the compound represented by Chemical Formula 2 to the transition metal compound of Chemical Formula 1 exceeds 1:5,000, excessive aluminoxane acts as a catalyst poison, which may prevent polymer chains from growing well.

When A of the cocatalyst compound represented by Chemical Formula 3 is boron, a molar ratio of the cocatalyst compound to the transition metal compound represented by Chemical Formula 1 may be 1:1 to 100, preferably 1:1 to 10, and more preferably 1:1 to 3. In addition, when A of the cocatalyst compound represented by Chemical Formula 3 is aluminum, a molar ratio of the cocatalyst compound to the transition metal compound represented by Chemical Formula 1 may vary depending on the amount of water in the polymerization system, and may be 1:1 to 1,000, preferably 1:1 to 500, and more preferably 1:1 to 100.

A molar ratio of the cocatalyst compound represented by Chemical Formula 4 to the main catalyst compound represented by Chemical Formula 1 may be 1:1 to 100, preferably 1:1 to 10, and more preferably 1:1 to 4. When a ratio of the cocatalyst compound represented by Chemical Formula 4 is less than 1:1, the amount of activator is relatively small and the metal compound cannot be completely activated, which may cause a problem in that the activity of the catalyst composition to be produced decreases, and when the ratio of the cocatalyst compound represented by Chemical Formula 4 exceeds 1:100, the metal compound is completely activated, but the unit cost of the catalyst composition may not be cost-effective or the purity of the polymer to be produced may decrease due to the remaining excess activator.

Meanwhile, the catalyst containing the main catalyst compound and the cocatalyst compound of the present disclosure may further contain a carrier. Here, as the carrier, any carrier formed of an inorganic or organic material used in the preparation of catalysts in the technical field to which the present disclosure pertains may be used without limitation.

According to an exemplary embodiment in the present disclosure, the carrier may be SiO₂, Al₂O₃, MgO, MgCl₂, CaCl₂, ZrO₂, TiO₂, B₂O₃, CaO, ZnO, BaO, ThO₂, SiO₂-Al₂O₃, SiO₂-MgO, SiO₂-TiO₂, SiO₂-V₂O₅, SiO₂-Cr₂O₃, SiO₂-TiO₂-MgO, bauxite, zeolite, starch, cyclodextrin, or a synthetic polymer.

Preferably, the carrier contains a hydroxy group on a surface thereof and may be one or more selected from the group consisting of silica (SiO₂), silica-alumina (SiO₂-Al2O₃), and silica-magnesia (SiO₂-MgO) .

As a method of supporting the catalyst containing the main catalyst compound and the cocatalyst compound on the carrier, a method of directly supporting the main catalyst compound on a dehydrated carrier; a method of pretreating the carrier with the cocatalyst compound and then supporting the main catalyst compound; a method of supporting the main catalyst compound on the carrier and then performing a posttreatment with the cocatalyst compound; a method of reacting the main catalyst compound with the cocatalyst compound and then adding the carrier for a reaction; or the like may be used.

The solvent that may be used in the supporting method may be an aliphatic hydrocarbon-based solvent, an aromatic hydrocarbon-based solvent, a halogenated aliphatic hydrocarbon-based solvent, or a mixture thereof.

Non-limiting examples of the aliphatic hydrocarbon-based solvent include pentane, hexane, heptane, octane, nonane, decane, undecane, and dodecane.

Non-limiting examples of the aromatic hydrocarbon-based solvent include benzene, monochlorobenzene, dichlorobenzene, trichlorobenzene, and toluene.

Non-limiting examples of the halogenated aliphatic hydrocarbon-based solvent include dichloromethane, trichloromethane, dichloroethane, and trichloroethane.

In addition, it is advantageous in terms of efficiency of a supporting process to perform the supporting method at a temperature of -70 to 200°C, preferably -50 to 150°C, and more preferably 0 to 100°C.

Meanwhile, in the present disclosure, the ethylene-alpha-olefin polymer produced through a polymerization process performed by direct contact of ethylene and an alpha-olefin comonomer compound may be produced by polymerization of monomers under conditions in which the catalytic sites are relatively insoluble and/or immobilized so that the polymer chains are rapidly immobilized according to these information. This immobilization may be performed, for example, by using a solid insoluble catalyst, by performing the polymerization in a medium in which the produced polymer is generally insoluble, and by maintaining the polymerization reactant and product below the crystallization temperature (T_{c}) of the polymer.

The catalyst described above may be preferably applied to the copolymerization of ethylene and alpha-olefins. Hereinafter, a method for producing an ethylene-alpha-olefin copolymer including copolymerizing ethylene and alpha-olefins in the presence of the catalyst will be described.

A polymerization process of ethylene and alpha-olefins is well known in the art, and include bulk polymerization, solution polymerization, slurry polymerization, and low pressure gas phase polymerization. A metallocene catalyst is particularly useful in a known form of operation using fixed bed, moving bed, or slurry processes performed in single, series, or parallel reactors.

When the polymerization reaction is performed in a liquid or slurry phase, a solvent, ethylene, or alpha-olefin monomer itself may be used as a medium.

Since the catalyst presented in the present disclosure is present in a homogeneous form in a polymerization reactor, it is preferable to apply the catalyst to a solution polymerization process performed at a temperature equal to or higher than a melting point of the corresponding polymer. However, as disclosed in U.S. Patent No. 4,752,597, the catalyst may be used in a slurry polymerization or gas phase polymerization process in the form of a heterogeneous catalyst composition obtained by supporting the transition metal compound and the cocatalyst on a porous metal oxide support. Therefore, when the catalyst of the present disclosure is used with an inorganic carrier or an organic polymer carrier, the catalyst may be applied to a slurry or gas phase process. That is, the transition metal compound and the cocatalyst compound may also be used in a form supported on an inorganic carrier or an organic polymer carrier.

The solvent that may be used in the polymerization reaction may be an aliphatic hydrocarbon-based solvent, an aromatic hydrocarbon-based solvent, a halogenated aliphatic hydrocarbon-based solvent, or a mixture thereof. Non-limiting examples of the aliphatic hydrocarbon-based solvent include butane, isobutane, pentane, hexane, heptane, octane, nonane, decane, undecane, dodecane, cyclopentane, methylcyclopentane, and cyclohexane. In addition, non-limiting examples of the aromatic hydrocarbon-based solvent include benzene, monochlorobenzene, dichlorobenzene, trichlorobenzene, toluene, xylene, and chlorobenzene. Non-limiting examples of the halogenated aliphatic hydrocarbon-based solvent include dichloromethane, trichloromethane, chloroethane, dichloroethane, trichloroethane, and 1,2-dichloroethane.

As described above, the ethylene-alpha-olefin copolymer according to the present disclosure may be produced by polymerizing ethylene and an alpha-olefin comonomer in the presence of the catalyst composition. In this case, the transition metal compound and the cocatalyst component may be separately added to a reactor, or the respective components may be mixed in advance and then added to the reactor, and mixing conditions such as the order of addition, temperature, and concentration are not particularly limited. For example, in a case where a copolymer of ethylene and 1-octene is produced, 1-octene may be included in an amount of 0.1 to 99.9 wt%, preferably 1 to 75 wt%, and more preferably 5 to 50 wt%.

Meanwhile, the amount of the catalyst added in the polymerization reaction of the present disclosure is not particularly limited because it may be determined within a range where the polymerization reaction of the monomer may sufficiently occur depending on the slurry phase, liquid phase, gas phase, or bulk process.

However, according to the present disclosure, the amount of the catalyst added may be 10⁻⁸ to 1 mol/L, preferably 10⁻⁷ to 10⁻¹ mol/L, and more preferably 10⁻⁷ to 10⁻² mol/L based on a concentration of the central metal (M) in the main catalyst compound per unit volume (L) of the monomer.

In addition, the polymerization reaction of the present disclosure may be a batch type, semi-continuous type, or continuous type reaction, and is preferably a continuous reaction.

The temperature and pressure conditions for the polymerization reaction of the present disclosure may be determined in the consideration of the efficiency of the polymerization reaction depending on the type of reaction and the type of reactor to be applied. The polymerization temperature may be 100 to 200°C, and preferably 120 to 160°C, and the pressure may be 1 to 3,000 atm, and preferably 1 to 1,000 atm.

### <Ethylene-Alpha-Olefin Copolymer>

The ethylene-alpha-olefin copolymer of the present disclosure is produced by the method for producing an ethylene-alpha-olefin copolymer.

The ethylene-alpha-olefin copolymer produced by the above method uses one type of metallocene catalyst, but an ethylene-alpha-olefin copolymer having two chains having different short chain branch contents is produced due to a catalyst isomer. It is determined that this is because, in the transition metal compound used as the main catalyst, as two different steric compounds, the R-type steric compound and the S-type steric compound coexist in one transition metal, as described above, the transition metal compound of the R-type steric compound forms a polymer chain having a high short chain branch content and a high molecular weight, and the transition metal compound of the R-type steric compound forms a polymer chain having a low short chain branch content and a low molecular weight.

Therefore, the ethylene-alpha-olefin copolymer of the present disclosure has two chain structures having different short chain branch contents, which indicates the number of carbon atoms attached to the side chain, and contains a polymer chain having a high short chain branch content and a high molecular weight, which is an amorphous or low-crystalline region, and a polymer chain having a low short chain branch content and a low molecular weight. The low-temperature impact strength may be improved by the polymer chain having a high content of the amorphous or low-crystalline short chain branch and a high molecular weight. Meanwhile, as the amorphous or low-crystalline region increases, physical properties such as tensile elongation, tensile strength, and shrinkage may be deteriorated. However, the polymer chain having a low short chain branch content and a low molecular weight is also present, which contributes to improving the physical properties such as tensile elongation, tensile strength, and shrinkage. Therefore, the ethylene-alpha-olefin copolymer of the present disclosure has improved low-temperature impact strength and also has improved physical properties such as tensile elongation, tensile strength, and shrinkage.

The ethylene-alpha-olefin copolymer of the present disclosure has two peaks when analyzed by thermal gradient interaction chromatography (TGIC) because it is eluted at two different temperatures due to a difference in elution temperature between the polymer chain having a high content of the amorphous or low-crystalline short chain branch and the polymer chain having a low content of the short chain branch.

When the ethylene-alpha-olefin-based copolymer of the present disclosure is analyzed by thermal gradient interaction chromatography (TGIC), the copolymer has a first elution temperature of 35 to 70°C as being eluted at a relatively low temperature due to a low adsorption strength of the polymer chain having a high content of the amorphous or low-crystalline short chain branch with graphite carbon in a TGIC column, and has a second elution temperature of 70 to 10°C as being eluted at a relatively high temperature due to a high adsorption strength of the polymer chain having a low content of the short chain branch with graphite carbon in the TGIC column. In this case, the center temperature of the first peak at which the first elution temperature appears is in a temperature range of 50 to 60°C, and the center temperature of the second peak at which the second elution temperature appears is in a temperature range of 80 to 90°C.

In the ethylene-alpha-olefin-based copolymer of the present disclosure, a first fraction defined from an integral area of the first peak may have a fraction ratio of 45 to 55%, and a content of short chain branching (SCB), which represents the number of CH₃ short chains per 1,000 carbon atoms, may be 55 or more on average. Meanwhile, a fraction ratio of a second fraction defined from an integral area of the second peak is smaller than the fraction ratio of the first fraction. This means that there are more polymer chains having a high amorphous or low-crystalline short chain branch content representing the first peak, which may be understood as ultimately indicating a high ratio of steric compounds with a racemic structure. Meanwhile, the second fraction may have an average SBC content of 40 or less, and the fraction ratio of the second peak may be 35 to 50%.

The ethylene-alpha-olefin copolymer may increase the polymerization activity of ethylene and alpha-olefin monomers and may exhibit a high molecular weight by using a catalyst containing the main catalyst compound and the cocatalyst compound. In this case, a weight average molecular weight (Mw) of the ethylene-alpha-olefin copolymer may be 10,000 to 1,000,000, preferably 50,000 to 800,000, and more preferably 100,000 to 300,000.

In addition, a molecular weight distribution (Mw/Mn) of the ethylene-alpha-olefin copolymer may be 1 to 10, preferably 1.5 to 8, and more preferably 1.5 to 3.

In addition, the ethylene-alpha-olefin copolymer may have a density of 0.868 to 0.880 g/mL.

A polypropylene resin composition may be prepared by mixing and blending the ethylene-alpha-olefin copolymer of the present disclosure with a polypropylene resin, and when a molded product is produced using the polypropylene resin composition, the molded product thus obtained has excellent tensile elongation, tensile strength, and shrinkage characteristics as well as excellent low-temperature impact strength.

### [Mode for Invention]

Hereinafter, the present disclosure will be described in detail with reference to Examples. However, the following Examples are merely illustrative of the present disclosure and are not intended to limit the present disclosure to the following Examples.

### <Preparation of Catalyst Composition>

### Synthesis of Compound (2)

A transition metal compound (2) to be used as a main catalyst was synthesized from a compound (1) according to the following Reaction Formula 2. A specific synthesis process is as follows.

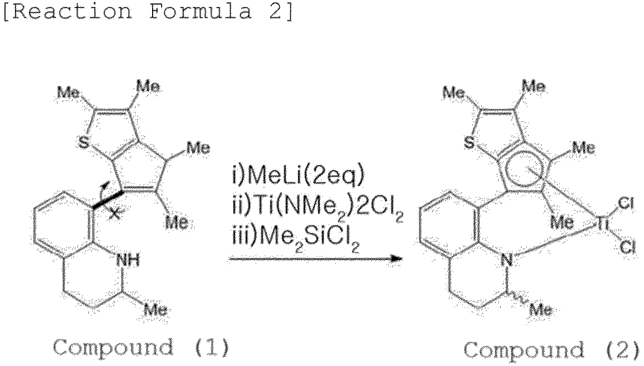

First, 1.63 g (3.55 mmol, 1.6 M diethyl ether solution) of methyllithium was added dropwise to 10 mL of a diethyl ether solution in which 0.58 g (1.79 mmol) of the compound (1) was dissolved at -30°C (step i).

The solution obtained in step i) was stirred at room temperature overnight, the temperature was lowered to -30°C, and then, 0.37 g (1.79 mmol) of Ti(NMe₂)₂Cl₂ was added to the solution at once (step ii).

The solution obtained in step ii) was stirred for 3 hours and then the solvent was completely removed using a vacuum pump to obtain a solid product. The obtained solid product was dissolved in 8 mL of toluene, and then 1.16 g (8.96 mmol) of Me₂SiCl₂ was added (step iii).

The solution obtained in step iii) was stirred at 80°C for 3 days, and then the solvent was removed using a vacuum pump. As a result, 0.59 g of a red solid compound (2) was obtained (yield 75%).

Through the ¹H NMR spectrum of the obtained red solid compound, it was confirmed that two steric compounds were present in a ratio of 2:1.

¹H NMR (C₆D₆): δ 7.10 (t, J = 4.4 Hz, 1H), 6.90 (d, J = 4.4 Hz, 2H), 5.27 and 5.22 (m, 1H, NCH), 2.54-2.38 (m, 1H, CH₂), 2.20-2.08 (m, 1H, CH₂), 2.36 and 2.35 (s, 3H), 2.05 and 2.03 (s, 3H), 1.94 and 1.93 (s, 3H), 1.89 and 1.84 (s, 3H), 1.72-1.58 (m, 2H, CH₂), 1.36-1.28 (m, 2H, CH₂), 1.17 and 1.14 (d, J = 6.4, 3H, CH₃) ppm.

¹³C{¹H} NMR (C₆D₆): 162.78, 147.91, 142.45, 142.03, 136.91, 131.12, 130.70, 130.10, 128.90, 127.17, 123.39, 121.33, 119.87, 54.18, 26.48, 21.74, 17.28, 14.46, 14.28, 13.80, 13.27 ppm.

### <Physical Property Analysis>

1. Density (g/mL): The copolymer treated with an antioxidant was prepared into a specimen with a thickness of 3 mm and a radius of 2 cm using a compression mold at 180°C, cooled to room temperature, and measured using ASTM D-792 (manufacturer: Toyo Seiki Seisaku-sho, Ltd., model name: T-001) .
2. Melt index (MI): A melt index was measured with an apparatus (manufacturer: MIRAGE Trading Co., Ltd., model name: SD-120L) by applying the ASTM D-1238 (condition E, 190°C, 2.16 kg load) method.
3. Molecular weight distribution (Mw/Mn): A molecular weight distribution was measured at 160°C using a 1,2,4-trichlorobenzene solvent using a gel permeation chromatography (GPC) (apparatus name: PL-GPC220, manufacturer: Agilent Technologies, Inc.) analysis method.
4. Comonomer content (wt%) : A comonomer content was analyzed by ¹H NMR (apparatus name: Avance DRX400, manufacturer: Bruker Corporation).
5. Tensile elongation and tensile strength: Tensile elongation and tensile strength were measured according to ASTM D790 using INSTRON 4466 apparatus.
6. IZOD impact strength: Measurement was performed according to ASTM D256, room temperature impact strength was measured at room temperature (23°C), and low-temperature impact strength was measured after being left in a low temperature chamber (-10°C and -30°C for 12 hours or longer) .
7. Shrinkage (mm/1,000 mm): A distance between the marked lines marked on the injection specimen was measured compared to the marked lines marked at 140.25 mm intervals on ASTM D638 Type 1 specimen mold.

### <TGIC Analysis>

Cross-Fractionation Chromatography (CFC) equipment available from Polymer Char was used, and the specimen to be analyzed was stirred at 150°C for 60 minutes to dissolve 1,2,4-trichlorobenzene (2.5 mg/mL), and then, the dissolved specimen was introduced into Thermal Gradient Interaction Chromatography (TGIC) column at 1 ml/min and then stabilized at 150°C for 20 minutes. Thereafter, the TGIC column was cooled to 35°C at a cooling rate of 20°C/min. The temperature was raised from 35°C to 130°C in 5°C increments, and elution was performed with a GPC column at a flow rate of 1 ml/min. The elution time at this time was 5 minutes, and the analysis time for each fraction was 20 minutes. After passing through the GPC column, an infrared detector (IR5) was used to determine the elution amount for each temperature fraction, the molecular weight and short chain branch distribution of the polymer corresponding to each fraction. The peak area of each fraction was checked using the analysis software "CFC calc", and n-heptane was used as an internal standard.

### Examples 1 to 3

After purging the inside of a high-pressure reactor (internal capacity: 2 L, stainless steel) with nitrogen at room temperature, 1 L of normal hexane and 2 mL of triisobutylaluminum were added. Subsequently, the controlled amounts of 1-butene and ethylene gas were injected, the reactor temperature was preheated to 140°C, a solution of 45.0 pmol of a dimethylanilinium tetrakis(pentafluorophenyl)borate cocatalyst was mixed with a mixed solution of 1.5 pmol of the synthesized transition metal compound (2) and 187.5 pmol of triisobutylaluminum, the mixture was injected into the reactor, and then, a polymerization reaction was performed for 5 minutes.

After the polymerization reaction was completed, the reaction was terminated using ethanol diluted with 10% HCl, the temperature was lowered to room temperature, and excess gas was discharged. Subsequently, the polymerization solution of the copolymer dispersed in the solvent was transferred to a container and dried in a vacuum oven at 80°C for 15 hours or longer to produce an ethylene-1-butene copolymer.

The physical properties of each ethylene-1-butene copolymer produced above were measured. The results are shown in Table 1.

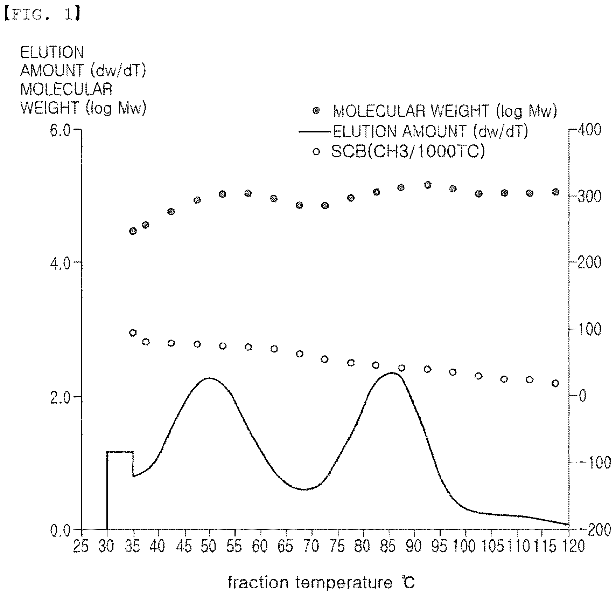

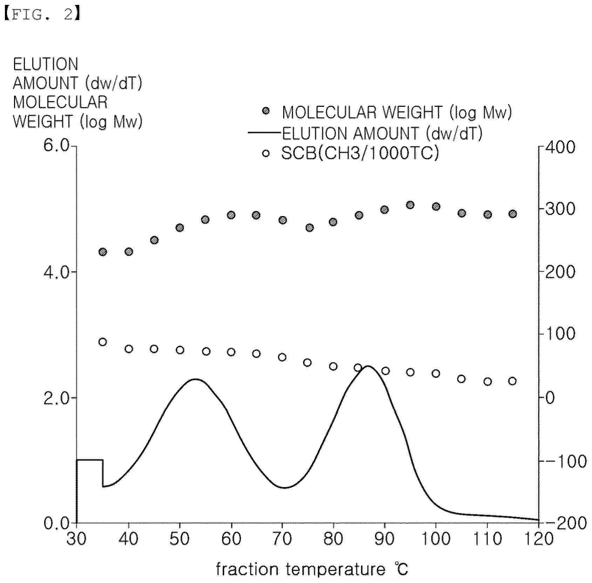

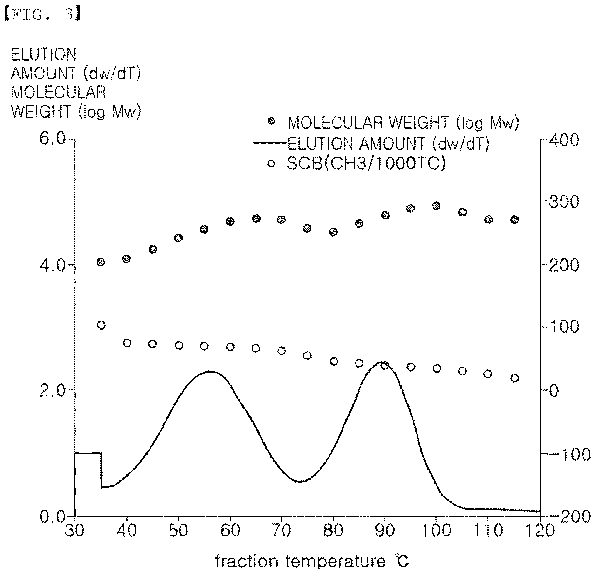

Furthermore, the elution curves according to the TGIC analysis results for the ethylene-1-butene copolymers of Examples 1 to 3 are illustrated in FIGS. 1 through 3, respectively.

### Example 4

An ethylene-1-octene copolymer was produced by performing a polymerization reaction in the same manner as in Example 1, except that 1-octene was used as a comonomer instead of 1-butene.

The physical properties of the ethylene-1-octene copolymer produced above were measured. The results are shown in Table 1.

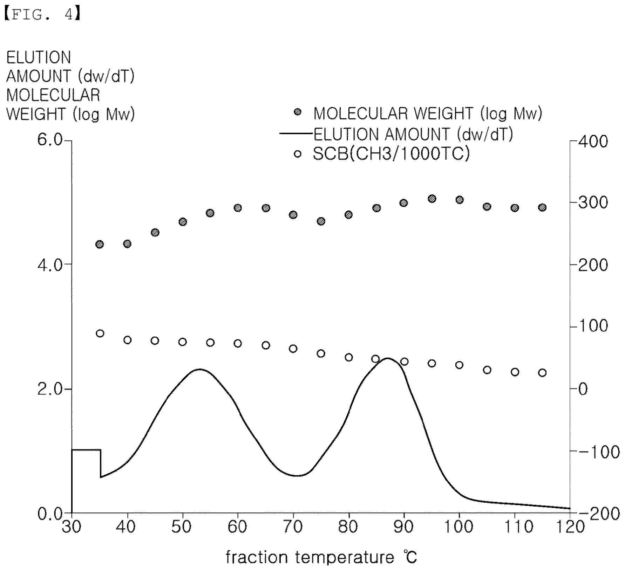

Furthermore, the elution curve according to the TGIC analysis results for the ethylene-1-butene copolymer of Example 4 is illustrated in FIG. 4.

### Comparative Examples 1 and 2

The ethylene-1-butene copolymer (product name: LC175) and the ethylene-1-octene copolymer (product name: LC670) commercially produced by LG Chem, Ltd. were purchased, and the physical properties thereof were measured. The results are shown in Table 1.

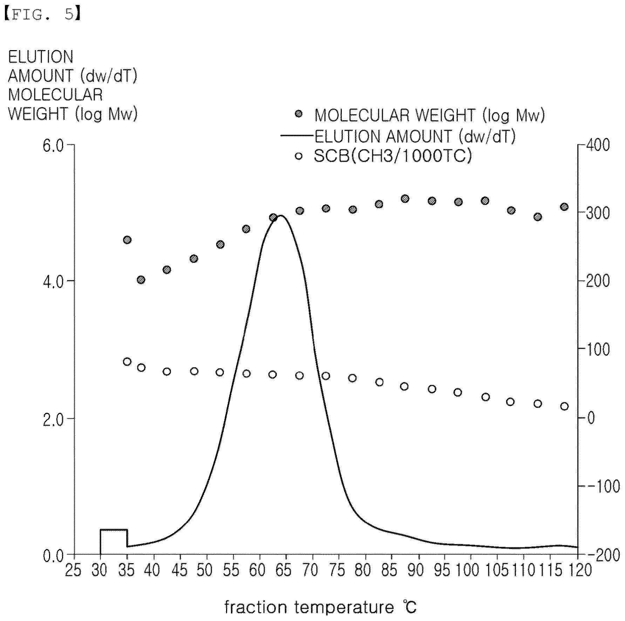

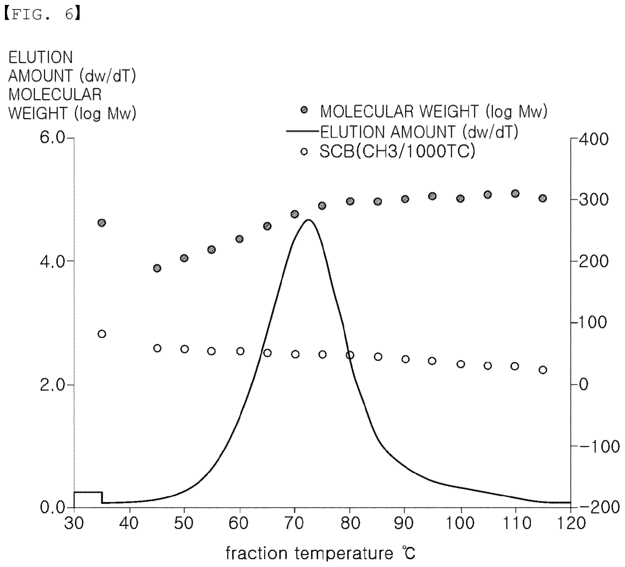

Furthermore, the elution curves according to the TGIC analysis results for the ethylene-alpha-olefin copolymers of Comparative Examples 1 and 2 are illustrated in FIGS. 5 and 6, respectively.

**[Table 1]**

| | | | Example | | | | Comparative Example | |
|---|---|---|---|---|---|---|---|---|
| | | | 1 | 2 | 3 | 4 | 1 | 2 |
| Copolymer physical properties | Comonomer | Type | 1-butene | 1-butene | 1-butene | 1-octene | 1-butene | 1-octene |
| | | Content | 27.9 | 26.0 | 24.5 | 36.6 | 27.5 | 36.3 |
| | Density (g/mL) | | 0.871 | 0.874 | 0.876 | 0.870 | 0.870 | 0.870 |
| | M.I (g/10 min.) | | 1.3 | 4.2 | 19.4 | 4.6 | 1.1 | 5.0 |
| | MWD | | 2.5 | 2.9 | 2.2 | 2.2 | 2.3 | 2.4 |
| | Tensile elongation (%) | | 1000 | 1000 | 1000 | 1000 | 665 | 1000 |
| | Tensile strength (MPa) | | 6.8 | 5.0 | 4.0 | 5.5 | 3.4 | 5.2 |
| TGIC analysis results | First peak | Center temperature (°C) | 50.2 | 53.1 | 56.1 | 56.8 | 63.8 | 72.3 |
| | | Fraction ratio (%) | 47 . 7 | 49.5 | 52.3 | 51.6 | 96.3 | 98.8 |
| | | Average SCB | 74.5 | 72.8 | 69.8 | 55.5 | 61.1 | 47 . 7 |
| | Second peak | Center temperature (°C) | 85.5 | 86.8 | 89.3 | 87.7 | - | - |
| | | Fraction ratio (%) | 47.3 | 46 | 43.1 | 46.9 | - | - |
| | | Average SCB | 36.7 | 39.4 | 37.2 | 34.6 | - | - |

As can be seen from Table 1 and FIGS. 1 through 4, the ethylene-alpha-olefin copolymers of Examples 1 to 4 were confirmed to have a first fraction (polymer chain having a high short chain branch content) and a second fraction (polymer chain having a low short chain branch content) defined by clearly distinguishable first and second peaks in the TGIC analysis results. In addition, it can be seen that, since a fraction ratio of the first peak area is larger than that of the second peak area and an average SBC content of the first peak area is high, more comonomers were introduced into the first peak area compared to the second peak area.

This is determined that because the R-type steric compound and the S-type steric compound used were present in the transition metal compound at a ratio of 1:0.8, the transition metal compound being used in each of Examples 1 to 4 as the main catalyst, and served as two catalysts having different structures, resulting in formation of a polymer chain having a low elution temperature, a high short chain branch content, and a high molecular weight and a polymer chain having a low short chain branch content and a low molecular weight.

Such a difference in short chain branch content also causes a difference in crystallinity. The polymer chain having a high short chain branch content is amorphous or has low crystallinity, while a chain having a low short chain branch content has high crystallinity. This may mean that two types of chains with a large difference in crystallinity due to a difference in short chain branch content are included together in the copolymer of the above Example.

Meanwhile, the ethylene-alpha-olefin copolymers of Comparative Examples 1 and 2 had only one peak as a result of TGIC analysis, and it was confirmed from Table 1 and FIGS. 5 and 6 that they were copolymers having one polymer chain structure.

### <Preparation of Composite Resin>

### Preparation Example 1

70 parts by weight of polypropylene (product name: JM-380, manufactured by Lotte Chemical Corporation) having a melt index of 60 g/10 min, 20 parts by weight of the olefin copolymer produced in Example 1, and 10 parts by weight of talc (product name: KCM-6300, manufactured by KOCH) were blended using a tumbler mixer and extruded in a temperature range of 190 to 230°C in a single-screw extruder with L/D of 35 and diameter of 40 mm to prepare a resin composition 1 in the form of pellets.

A specimen 1 was prepared by molding the pellet-shaped resin composition 1 prepared above in a temperature range of 190 to 240°C using an injection molding machine.

The prepared specimen 1 was left in a constant temperature and humidity room (25°C, humidity 50%) for 24 hours or longer, and then the physical properties of the specimen 1 were measured and shown in Table 2.

### Preparation Example 2

A resin composition 2 was prepared in the same manner as in Preparation Example 1, except that the olefin copolymer produced in Example 4 was used instead of the olefin copolymer produced in Example 1, and then a specimen 2 was prepared. The physical properties of the specimen 2 were measured and shown in Table 2.

### Preparation Example 3

A resin composition 3 was prepared in the same manner as in Preparation Example 1, except that the olefin copolymer of Comparative Example 1 was used instead of the olefin copolymer produced in Example 1, and then a specimen 3 was prepared. The physical properties of the specimen 3 were measured and shown in Table 2.

### Preparation Example 4

A resin composition 4 was prepared in the same manner as in Preparation Example 1, except that the olefin copolymer of Comparative Example 2 was used instead of the olefin copolymer produced in Example 1, and then a specimen 4 was prepared. The physical properties of the specimen 4 were measured and shown in Table 2.

**[Table 2]**

| Processing physical properties | | Preparation Example 1 | Preparation Example 2 | Preparation Example 3 | Preparation Example 4 |
|---|---|---|---|---|---|
| Tensile strength (kgf/cm²) | | 203.0 | 203.0 | 158.8 | 163.7 |
| Impact strength (kgf·cm/cm²) | (23°C) | 34.0 | 39.6 | 30.9 | 37.5 |
| | (-10°C) | 7.9 | 6.2 | 6.1 | 5.7 |
| | (-30°C) | 4.4 | 3.6 | 4.0 | 2.8 |
| Shrinkage (mm/1,000 mm) | | 9.7 | 8.0 | 13.2 | 10.0 |

From Table 2, the results of the TGIC were shown that, compared to the case of using the ethylene-alpha-olefin copolymers of Comparative Examples 1 and 2 having one polymer chain structure due to one peak, the polypropylene resin composition containing each of the ethylene-alpha-olefin copolymers of Examples 1 and 4 having two peaks had improved tensile elongation, tensile strength, and shrinkage due to the presence of a chain having a low short chain branch content, and had improved room temperature and low temperature impact strength due to the presence of a polymer chain having a high short chain branch content.

## Claims

1. An ethylene-alpha-olefin copolymer comprising an ethylene structural unit and an alpha-olefin structural unit,
wherein the ethylene-alpha-olefin copolymer has a first peak appearing at a first elution temperature of 35 to 70°C and a second peak appearing at a second elution temperature of 70 to 100°C when measured in thermal gradient interaction chromatography (TGIC) analysis, and
a fraction ratio defined by the first peak from an integral area of the first peak and the second peak is 45 to 55% and is greater than a fraction ratio defined by the second peak from an integral area of the second peak.

2. The ethylene-alpha-olefin copolymer of claim 1, wherein the fraction ratio of the second peak is 35 to 50%.

3. The ethylene-alpha-olefin copolymer of claim 1, wherein a fraction of the first peak has a short chain branching number of 55 or more per 1,000 carbon atoms, and a fraction of the second peak has a short chain branching number of 40 or less per 1,000 carbon atoms.

4. The ethylene-alpha-olefin copolymer of claim 1, wherein the ethylene-alpha-olefin copolymer has a density of 0.868 to 0.880 g/ml.

5. A method for producing the ethylene-alpha-olefin copolymer of any one of claims 1 to 4, the method comprising polymerizing ethylene and at least one olefin-based monomer in the presence of a main catalyst compound containing a transition metal compound represented by the following Chemical Formula 1 and one or more cocatalyst compounds selected from compounds represented by the following Chemical Formulas 2 to 4: 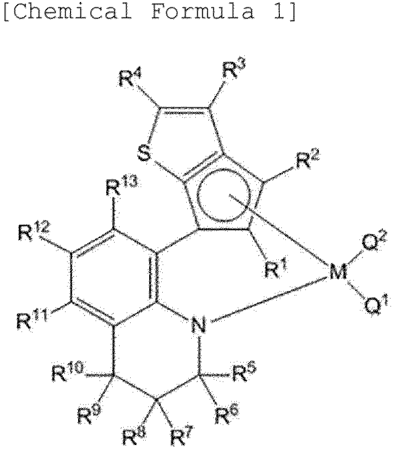 in Chemical Formula 1,
M is a group 4 transition metal;
Q¹ and Q² are each independently halogen, (C₁-C₂₀) alkyl, (C₂-C₂₀) alkenyl, (C₂-C₂₀) alkynyl, (C₆-C₂₀) aryl, (C₁-C₂₀) alkyl (C₆-C₂₀) aryl, (C₆-C₂₀) aryl (C₁-C₂₀) alkyl, (C₁-C₂₀) alkylamido, (C₆-C₂₀) arylamido, or (C₁-C₂₀) alkylidene;
R¹, R², R³, R⁴, R⁵, R⁶, R⁷, R⁸, R⁹, and R¹⁰ are each independently hydrogen, (C₁-C₂₀) alkyl with or without an acetal, ketal, or ether group, (C₂-C₂₀) alkenyl with or without an acetal, ketal, or ether group, (C₁-C₂₀) alkyl (C₆-C₂₀) aryl with or without an acetal, ketal, or ether group, (C₆-C₂₀) aryl (C₁-C₂₀) alkyl with or without an acetal, ketal, or ether group, or (C₁-C₂₀) alkylsilyl with or without an acetal, ketal, or ether group; R¹ and R² may be connected to each other to form a ring, R³ and R⁴ may be connected to each other to form a ring, and two or more of R⁵ to R¹⁰ may be connected to each other to form a ring;
R¹¹, R¹², and R¹³ are each dependently hydrogen, (C₁-C₂₀) alkyl with or without an acetal, ketal, or ether group, (C₂-C₂₀) alkenyl with or without an acetal, ketal, or ether group, (C₁-C₂₀) alkyl (C₆-C₂₀) aryl with or without an acetal, ketal, or ether group, (C₆-C₂₀) aryl (C₁-C₂₀) alkyl with or without an acetal, ketal, or ether group, (C₁-C₂₀) alkylsilyl with or without an acetal, ketal, or ether group, (C₁-C₂₀) alkoxy, or (C₆-C₂₀) aryloxy; and
R¹¹ and R¹² or R¹² and R¹³ may be connected to each other to form a ring,
[Chemical Formula 2] - [Al(Ra)-O]ₙ-
in Chemical Formula 2,
Ra is each independently halogen or a (C₁-C₂₀) hydrocarbyl group substituted or unsubstituted with halogen; and
n is an integer of 2 or more,
[Chemical Formula 3] Q(Rb)₃
in Chemical Formula 3,
Q is aluminum or boron; and
Rb is each independently halogen or a (C₁-C₂₀) hydrocarbyl group substituted or unsubstituted with halogen,
[Chemical Formula 4] [W]⁺[Z(Rc)4]⁻
in Chemical Formula 4,
[W]⁺ is a cationic Lewis acid or a cationic Lewis acid to which a hydrogen atom is bonded;
Z is a group 13 element; and
Rc is each independently a (C₆-C₂₀) aryl group substituted with one or two or more substituents selected from the group consisting of halogen, a (C₁-C₂₀) hydrocarbyl group, an alkoxy group, and a phenoxy group, or a (C₁-C₂₀) alkyl group substituted with one or two or more substituents selected from the group consisting of halogen, a (C₁-C₂₀) hydrocarbyl group, an alkoxy group, and a phenoxy group.

6. The method of claim 5, wherein R-type and S-type steric compounds coexist in the transition metal compound.

7. A polypropylene resin composition comprising:
polypropylene; and
the ethylene-alpha-olefin copolymer of any one of claims 1 to 4.

8. A molded product produced using the resin composition of claim 7.
